# EUROPEAN PATENT APPLICATION

(11) **EP 4 703 839 A1**
(43) Date of publication of application: **04.03.2026**
(21) Application number: 25196236.1
(22) Date of filing: 15.08.2025
(51) Int. Cl.: G05D 1/686, B62D 65/18, G05D 105/45, G05D 107/70, G05D 109/10, G05D 111/10

(54) **CONTROL DEVICE**

(30) Priority: 29.08.2024 JP 2024147443
(71) Applicant: TOYOTA JIDOSHA KABUSHIKI KAISHA, Toyota-shi, Aichi-ken 471-8571 (JP)
(72) Inventor: IWAHORI, Kento, Toyota-shi, 471-8571 (JP)
(74) Representative: J A Kemp LLP

(57) **Abstract**

A control device includes: a controller configured to control operations of a plurality of moving objects capable of moving under unmanned driving; and an acquisition unit configured to acquire characteristic information of an operator performing a work between a target moving object to be controlled among the plurality of moving objects and a continuous moving object moving in front or rear of the target moving object, wherein the controller is configured to control the target moving object and the continuous moving object such that an interval between the target moving object and the continuous moving object is a target interval, using the acquired characteristic information.

## Description

### BACKGROUND

### FIELD

The present disclosure relates to a control device.

### RELATED ART

Japanese Patent Application Publication (Translation of PCT Application) No. 2017-538619 describes a method for remotely operating a vehicle running in a manufacturing system.

The manufacturing system may include a manufacturing process or an inspection process for performing works on multiple running vehicles. The characteristics of operators who perform the works, such as their body size and work skills, vary among the operators. Thus, a distance between vehicles may not be suitable for some operators, which may reduce their work efficiency. This problem is common not only to vehicles but also to moving objects.

### SUMMARY

The present disclosure can be implemented by having the following aspects.
(1) According to an aspect of the present disclosure, a control device is provided. The control device includes: a controller configured to control operations of a plurality of moving objects capable of moving under unmanned driving; and an acquisition unit configured to acquire characteristic information of an operator performing a work between a target moving object to be controlled among the plurality of moving objects and a continuous moving object moving in front or rear of the target moving object, wherein the controller is configured to control the target moving object and the continuous moving object such that an interval between the target moving object and the continuous moving object is a target interval, using the acquired characteristic information. According to this aspect, the characteristic information is, for example, information on the operator's body size, and the target interval is set longer than the standard when the body size is greater than the standard, thereby widening a space where the operator performs the work, thus enabling suppression of a reduction in work efficiency.
(2) In the control device of the above aspect, the characteristic information may be information related to a physical characteristic of the operator, the acquisition unit may acquire a body size indicated by the physical characteristic using a captured image of the operator, and the control device may include a setting unit configured to set the target interval using a predetermined correspondence between the body size and the target interval. According to this aspect, the information on the physical characteristics is made available using the captured image even when the information indicating the correspondence between the operator and the physical characteristic is not prepared. In addition, the setting unit is capable of efficiently setting the target interval using the predetermined correspondence.
(3) In the control device of the above aspect, the characteristic information may be information related to a proficiency level in manufacturing, and the control device may include a setting unit configured to set the target interval using a predetermined correspondence between the proficiency level and the target interval. According to this aspect, the characteristic information is the proficiency level in manufacturing by the operator, and the target interval is set longer than the standard when the proficiency level is low, thereby widening the space where the operator performs the work, thus enabling a reduction in work efficiency. In addition, the setting unit is capable of efficiently setting the target interval using the predetermined correspondence.
(4) In the control device of the above aspect, the acquisition unit may acquire an operator identifier assigned to the operator in advance and may acquire the characteristic information corresponding to the acquired operator identifier by referring to a database that associates the operator identifier with the proficiency level, and the control device may further include an updating unit configured to count a work count the operator has performed the work and may update the database such that the proficiency level associated with the operator becomes higher when the work count is determined to be greater than a predetermined standard count. It is expected that the greater the work count the operator performs the work, the higher the proficiency level of the operator. Therefore, according to this aspect, automatic updating of the proficiency level is enabled without any human work to update the proficiency level.
(5) In the control device according to the above aspect, the operator may wear clothing with an appearance that varies in accordance with a classification corresponding to the proficiency level, and the acquisition unit may acquire the characteristic information by identifying the classification of the operator using a captured image of the clothing of the operator. This aspect enables the acquisition unit to acquire the characteristic information by using the captured image of the operator.

In addition to the control device described above, the present disclosure may be implemented in the form of a system, a control method, a non-transitory tangible recording medium in which a control program is readably recorded by a computer, or the like.

### BRIEF DESCRIPTION OF THE DRAWINGS

FIG. 1 is a conceptual diagram showing a configuration of a system in a first embodiment;
FIG. 2 is a block diagram showing the configuration of the system;
FIG. 3 is a flowchart showing a processing procedure of vehicle running control in the first embodiment;
FIG. 4 is a plan view for explaining the layout of a production line;
FIG. 5 is a flowchart showing a processing procedure of a target interval setting process;
FIG. 6 is a diagram for explaining an interval setting map;
FIG. 7 is a block diagram showing a configuration of a server in a second embodiment;
FIG. 8 is a diagram for explaining a characteristic information database;
FIG. 9 is a diagram for explaining an interval setting map of the second embodiment;
FIG. 10 is an explanatory diagram showing a schematic configuration of a system in a fourth embodiment; and
FIG. 11 is a flowchart showing a processing procedure of vehicle running control in the fourth embodiment.

### DETAILED DESCRIPTION

### A. First Embodiment:

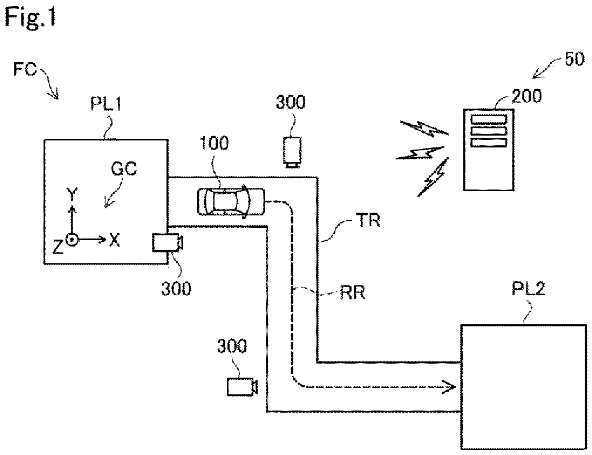

FIG. 1 is a conceptual diagram showing a configuration of a system 50 in a first embodiment. The system 50 has one or more vehicles 100 as moving objects, a server 200, and one or more external sensors 300.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In the present embodiment, the system 50 is used in a factory FC that manufactures the vehicles 100. In the present embodiment, the reference coordinate system of the factory FC is a global coordinate system GC and a location in the factory can be expressed by X, Y, and Z coordinates in the global coordinate system GC. The factory FC includes a first location PL1 and a second location PL2. The first location PL1 and the second location PL2 are connected by a track TR on which the vehicle 100 can run. In the factory FC, a plurality of external sensors 300 is provided along the track TR. The position of each external sensor 300 in the factory FC is preadjusted. The vehicle 100 moves from the first location PL1 to the second location PL2 through the track TR under unmanned driving.

In the present embodiment, at the first location PL1, an assembly process of parts is performed on the vehicle 100 in the form of a platform in a production line POL, which will be described later. After the assembly is completed, the vehicle 100 moves to the second location PL2 where the next process is performed. The vehicle 100 in the form of a platform includes at least a vehicle control device 110, an actuator group 120, and a communication device 130 in order to exert three functions of "running", "turning", and "stopping" under unmanned driving.

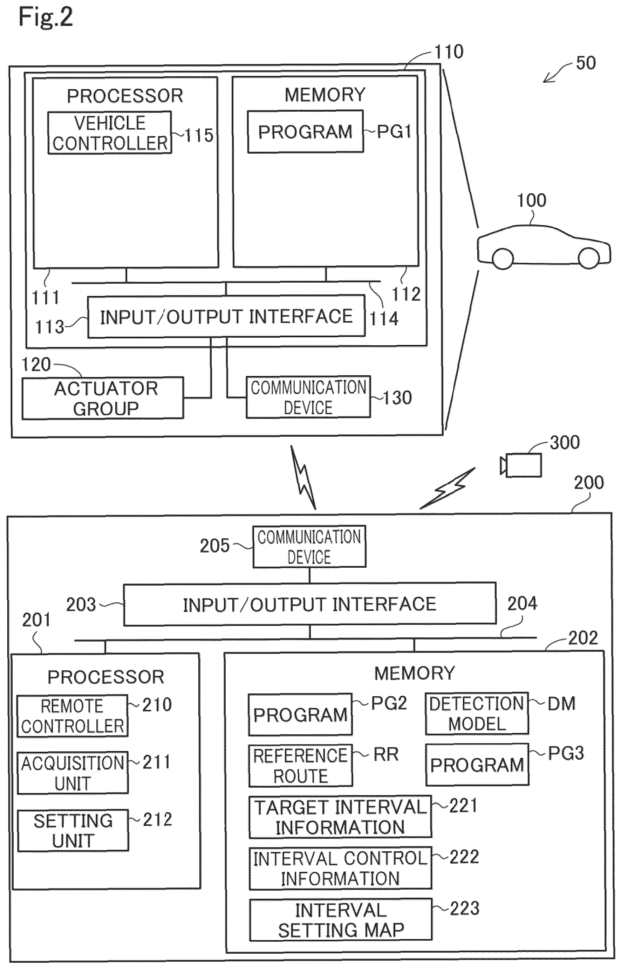

FIG. 2 is a block diagram showing the configuration of the system 50. The vehicle 100 includes the vehicle control device 110 for controlling various parts of the vehicle 100, the actuator group 120 including one or more actuators that drive the parts under the control of the vehicle control device 110, and the communication device 130 for communicating with an external device such as the server 200 via wireless communication. The actuator group 120 includes an actuator of a driving device for accelerating the vehicle 100, an actuator of a steering device for changing a traveling direction of the vehicle 100, and an actuator of a braking device for decelerating the vehicle 100.

The vehicle control device 110 is composed of a computer that includes a processor 111, a memory 112, an input/output interface 113, and an internal bus 114. The processor 111, the memory 112, and the input/output interface 113 are connected via the internal bus 114 to enable bidirectional communication. The actuator group 120 and the communication device 130 are connected to the input/output interface 113. The processor 111 executes a program PG1 stored in the memory 112 to implement various functions, including a function as a vehicle controller 115.

The vehicle controller 115 controls the actuator group 120 to cause the vehicle 100 to run. The vehicle controller 115 controls the actuator group 120 using a running control signal received from the server 200, thereby allowing the vehicle 100 to run. The running control signal is a control signal to cause the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100.

The server 200 is composed of a computer that includes a processor 201, a memory 202, an input/output interface 203, and an internal bus 204. The processor 201, the memory 202, and the input/output interface 203 are connected via the internal bus 204 to enable bidirectional communication. A communication device 205 for communicating with various devices outside the server 200 is connected to the input/output interface 203. The communication device 205 can communicate with the vehicle 100 via wireless communication and can communicate with each external sensor 300 via wired or wireless communication. The processor 201 executes a program PG2 stored in the memory 202 to implement various functions, including a function as a remote controller 210.

The remote controller 210 controls the operations of a plurality of vehicles 100 that are movable under unmanned driving. Specifically, the remote controller 210 acquires detection results from the sensors, creates a running control signal for controlling the actuator group 120 of the vehicle 100 based on the detection results, and transmits the running control signal to the vehicle 100, causing the vehicle 100 to run via remote control. The remote controller 210 may create and output not only the running control signal, but also control signals for controlling the actuators that operate various auxiliary devices provided in the vehicle 100 as well as various equipment such as wipers, power windows, and lamps, for example. In other words, the remote controller 210 may operate such various equipment and various auxiliary devices via remote control.

In addition to the above configuration, the processor 201 includes an acquisition unit 211 and a setting unit 212. The memory 202 stores a program PG3 and an interval setting map 223 in addition to the above configuration. The acquisition unit 211 and the setting unit 212 are functional parts implemented by executing the program PG3. The acquisition unit 211 acquires characteristic information on an operator WO who performs the work on the production line POL to be described later. The setting unit 212 sets a target interval TI described later, using the acquired characteristic information. The memory 202 stores target setting information 221 and interval control information 222. The target setting information 221 is information that associates an area identifier (described later) with the target interval TI. The interval control information 222 is information that associates the area identifier with the target interval TI indicating a rearward interval BI to be described later. The interval setting map 223 is a map indicating a correspondence between the body size of the operator WO and the target interval TI.

The external sensor 300 is a sensor located outside the vehicle 100. The external sensor 300 in the present embodiment is a sensor that captures the vehicle 100 from outside the vehicle 100. The external sensor 300 includes a communication device (not shown) and can communicate with other devices such as the server 200 via wired or wireless communication.

Specifically, the external sensor 300 is configured by a camera. The camera as the external sensor 300 captures the vehicle 100 and outputs a captured image as a detection result.

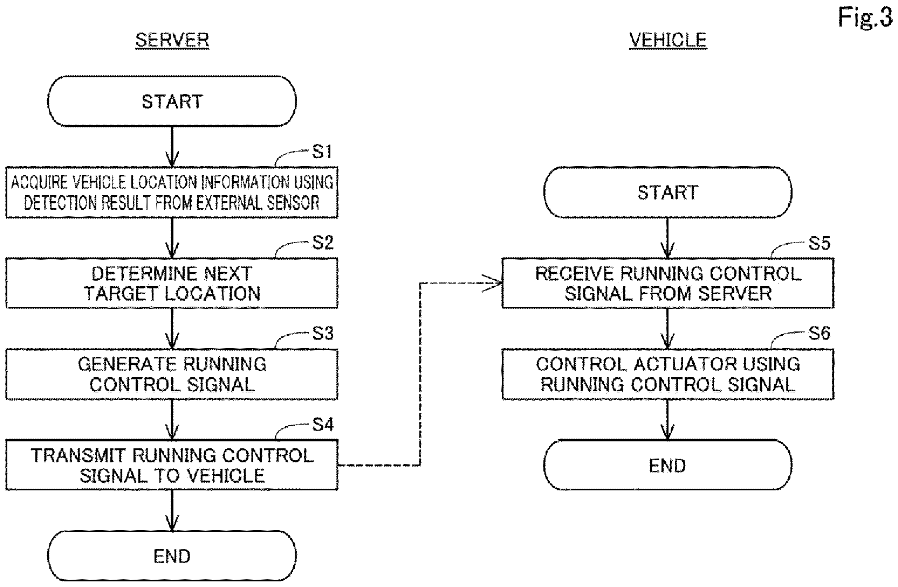

FIG. 3 is a flowchart showing the processing procedure of the running control of the vehicle 100 in the first embodiment. In the processing procedure of FIG. 3, the processor 201 of the server 200 functions as the remote controller 210 by executing a program PG2. The processor 111 of the vehicle 100 functions as the vehicle controller 115 by executing the program PG1.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 50 or outside the system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

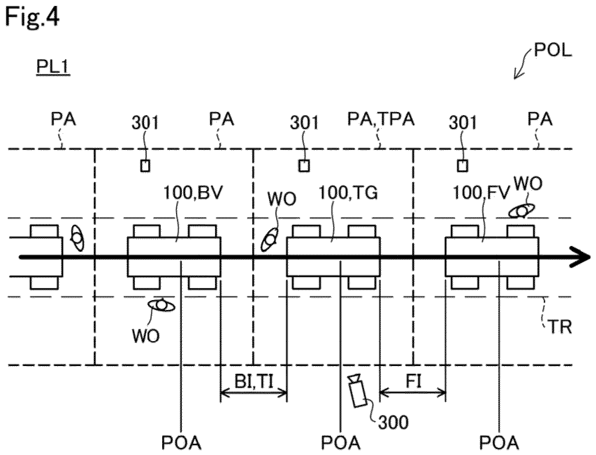

FIG. 4 is a plan view for explaining the layout of the production line POL. The production line POL covers a plurality of work areas PA arranged along the track TR. Each work area PA is uniquely pre-assigned with an area identifier. A communication device 301 is provided in each work area PA. Details of the communication device 301 are described in the second embodiment. A plurality of vehicles 100 runs along the production line POL. The arrow shown in FIG. 4 indicates a running direction of the vehicles 100.

The work processes performed in the work areas PA include those performed by a work robot (not shown), as well as those performed by the operator WO.

The works performed by the operator WO include an inter-vehicle work, in which the operator WO enters between two vehicles 100 running continuously along the production line POL. Specifically, in the case of works to assemble parts in the front or rear of vehicle 100, the operator WO enters between two vehicles 100 to perform the assembly work. The body size of operators WO varies among individuals. Thus, a predetermined standard interval may make it difficult for an operator with a large body to perform the work. Specifically, for example, work efficiency may be reduced due to the need to take care to prevent parts from coming into contact with the vehicle 100. Here, in the present disclosure, the "interval" of the vehicle 100 refers to the interval between two vehicles 100 running continuously. In the present embodiment, when the body size of the operator WO is larger than a predetermined standard size, the interval between the vehicles 100 is controlled to be longer than the standard interval. This suppresses a reduction in work efficiency.

In the present embodiment, the remote controller 210 performs control such that an interval between a target vehicle TG, which is located in the target work area PA, and a rear vehicle BV, which runs behind the target vehicle TG, becomes a target interval TI. The interval between the target vehicle TG and the rear vehicle BV behind the target vehicle TG is referred to as a rearward interval BI. In contrast, the interval between the target vehicle TG and a front vehicle FV running in front of the target vehicle TG is referred to as the forward interval FI.

As shown in FIG. 4, at an inter-vehicle work area TPA where the inter-vehicle work is performed, the operator WO performs the inter-vehicle work between the target vehicle TG and the rear vehicle BV running behind the target vehicle TG. This operator WO performs a work to install a part in the rear of the target vehicle TG.

The area identifier assigned to each work area PA is associated with the content of the process in advance. The content of the process is, for example, whether the work is the inter-vehicle work or not, whether the location where the inter-vehicle work is performed is in front or rear of the target vehicle TG. Furthermore, the standard interval is associated with the area identifier in advance. The standard interval reflects the content of the process. For example, the standard interval varies depending on the size of the part to be installed, the size of a tool, and the number of operators WO who perform the work together.

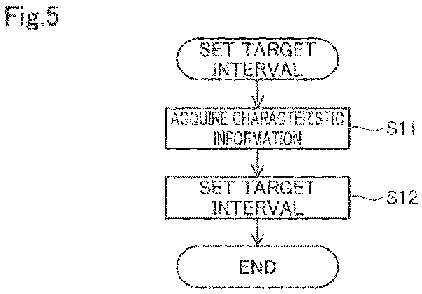

FIG. 5 is a flowchart showing the processing process of the target interval setting process. In the present embodiment, the server 200 performs the target interval setting process before manufacturing using the production line POL is started. Typically, the server 200 performs the target interval setting process in the morning of a day when the production line POL is in operation. The target interval setting process is started after the entry of the operator WO into the work area PA is completed. In the present embodiment, the target interval setting process is started at a predetermined start time. It should be noted that, instead of using the time, as a condition for starting the target interval setting process, the entry of the operator WO may be detected based on image analysis of a captured image taken by the external sensor 300, for example. The server 200 performs the target interval setting process for each work area PA, targeting all work areas PA where the inter-vehicle work is performed on the production line POL. A case in which the operator WO performs inter-vehicle work behind the target vehicle TG shown in FIG. 4 will be described as an example in the present embodiment.

In step S11 of FIG. 5, the acquisition unit 211 acquires the characteristic information of the operator WO who performs the work in the work area PA where the inter-vehicle work is performed. In the present embodiment, the acquisition unit 211 acquires the characteristic information through image analysis using the captured image that includes the operator WO, which is taken by the external sensor 300. In the present embodiment, the characteristic information is information related to the physical characteristics of the operator WO. In the present embodiment, the information related to the physical characteristic pertains to the body size. The acquisition unit 211 detects an external shape of the operator WO in the captured image using a method similar to a method for detecting the external shape of the vehicle 100. The acquisition unit 211 then determines the rank of the body size to be "A", "B", or "C", which is a predetermined rank, based on the size of the detected external shape. The ranks "A", "B", and "C" represent body sizes in ascending order, from smallest to largest. The rank "B" is the standard size. The body size of the operator WO may change over time. By acquiring the characteristic information using the captured images, the acquisition unit 211 can acquire the latest body size of the operator WO.

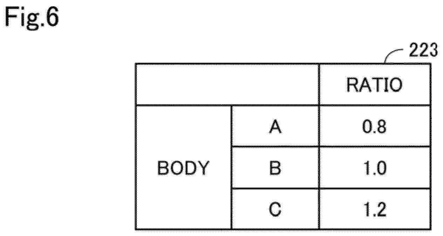

In step S12, the setting unit 212 sets the target interval TI using the acquired characteristic information. FIG. 6 is a diagram for explaining the interval setting map 223 used in step S12.

As shown in FIG. 6, the interval setting map 223 is a map that associates the rank of the body size with the ratio for determining the target interval TI. The setting unit 212 sets, as the target interval TI, a value obtained by multiplying the standard interval, which is associated with the area identifier in advance, by the ratio in the interval setting map 223. For example, when the body size belongs to the rank A, the target interval TI is set to a value obtained by multiplying the standard interval set for the work area by the ratio "0.8". The setting unit 212 updates the value of the target interval TI associated with the corresponding area identifier in the target setting information 221 to the set latest value.

As shown in FIG. 6, the interval setting map 223 is set such that the ratio increases in the order of body ranks A, B, and C. Thus, when the body size of an operator WO is larger than the standard, the target interval TI is set longer than the standard interval. This allows the target interval TI to be set so that an area where the inter-vehicle work is performed becomes wider when the body size of the operator WO is larger than the standard.

Also in the case of a work area PA where the inter-vehicle work is performed between the target vehicle TG and a front vehicle running in front of the target vehicle TG, the target interval TI is set for the target work area PA in the same way.

The setting unit 212 completes this processing routine after performing step S12. After the setting unit 212 completes setting the target interval TI for all work areas PA where the inter-vehicle work is performed, the setting unit 212 makes the interval control information 222 using the target setting information 221. The interval control information 222 is information that associates the area identifier with a target rearward interval BI. Specifically, the setting unit 212 changes the corresponding area identifier for the target interval TI of the work area PA where the inter-vehicle work is performed between the target vehicle TG and the front vehicle FV, so that the target interval TI indicates the rearward interval BI.

In the present embodiment, for remote control of the first location PL1 equipped with the production line POL, the remote control is performed using the thus-made interval control information 222. Specifically, each work area PA has a predefined adjustment position POA shown in FIG. 4. The adjustment position POA is associated in detail with positional information indicating a line traversing the track TR. When it is determined that the vehicle 100 has passed through the adjustment position POA, the remote controller 210 remotely controls this vehicle 100 to satisfy the target interval TI associated with the work area PA that this vehicle 100 will enter next.

Specifically, when the remote controller 210 determines that the vehicle 100 to be controlled has passed through the adjustment position POA based on the vehicle positional information acquired in step S1 of FIG. 3, in step S2, the remote controller 210 determines a next target position to achieve the target interval TI associated with a work area PA to be entered next. First, specifically, the remote controller 210 estimates the next target position of the front vehicle FV in front of the vehicle 100 to be controlled, using the current position and current speed of the front vehicle FV. Next, the remote controller 210 determines the next target position of the vehicle 100 to be controlled such that the distance to the next target location of the front vehicle FV is the target interval TI. In step S3, the remote controller 210 generates a running control signal to cause the vehicle 100 to be controlled to run toward the determined target position. The vehicle 100 that has received the running control signal runs according to the running control signal. In this way, each vehicle 100 is remotely controlled to achieve the target interval TI.

In the present embodiment, the remote controller 210 creates the running control signal to accelerate the vehicle 100 when the target interval TI is short relative to the current forward interval FI of the vehicle 100 to be controlled. Further, in the present embodiment, if the target interval TI is long relative to the current forward interval FI of the vehicle 100 to be controlled, the remote controller 210 creates the running control signal such that the vehicle 100 decelerates.

In another embodiment, the remote controller 210 may create a running control signal that includes a period of time during which the vehicle 100 stops when the target interval TI is long relative to the current forward interval FI of the vehicle 100 to be controlled. In a further embodiment, a running control signal of the front vehicle FV of the vehicle 100 to be controlled may be adjusted, in addition to the running control signal of the vehicle 100 to be controlled.

In the present embodiment, the adjustment position POA is set at a position where the work in the work area PA is expected to be completed. Furthermore, in the present embodiment, when the acceleration of the vehicle 100 is changed, the running control signal is created such that its speed changes gradually. This suppresses a reduction in work efficiency of the operator WO.

The server 200 is also referred to as a remote control device. The target vehicle TG is also referred to as a target moving object. The rear vehicle BV and the front vehicle FV of the target vehicle TG are also referred to as continuous moving objects.

According to the first embodiment described above, the server 200 includes the remote controller 210, the acquisition unit 211, and the setting unit 212. The acquisition unit 211 acquires the characteristic information of the operator WO who performs the work in the work area PA where the inter-vehicle work is performed. The setting unit 212 sets the target interval TI using the acquired characteristic information. The remote controller 210 controls the vehicle 100 so as to achieve the target interval TI. The target interval TI reflects the body size of the operator WO, thereby suppressing a reduction in work efficiency of the inter-vehicle work.

When the body size of the operator WO is smaller than the standard, the target interval TI is set shorter than the standard interval. This allows all the intervals on the production line POL to be adjusted when there is a work area PA where the target interval TI is set longer than the standard interval. Specifically, when the target interval TI is set longer than the standard interval, the distance between the first vehicle 100 and the last vehicle 100 running on the production line POL becomes longer. Therefore, the overall process time from the start to the end of manufacturing on the production line POL for one vehicle 100 becomes longer when the speeds of these vehicles are substantially constant. Here, when a work area PA is provided where the target interval TI is set shorter than the standard interval, the overall process time can be prevented from becoming excessively long.

The acquisition unit 211 acquires information on physical characteristics as the characteristic information using an image of the operator WO. Then, the acquisition unit 211 acquires the body size indicated by the physical characteristics. The setting unit 212 sets the target interval TI using the interval setting map 223 that indicates a predetermined correspondence between the body size indicated by the physical characteristics and the target interval TI. In the interval setting map 223, the target interval TI is set to be longer than the standard interval when the body of the operator WO is larger than the standard. Therefore, the setting unit 212 can efficiently set the target interval TI appropriate for the body size of the operator WO using the interval setting map 223.

### B. Second Embodiment:

In the first embodiment, the acquisition unit 211 acquires the body size, which is characteristic information of the operator WO, using a captured image of the operator WO. In the present embodiment, the acquisition unit 211 acquires the characteristic information using an IC tag that the operator WO wears in advance. In addition to the physical characteristics, the acquisition unit 211 acquires information related to a proficiency level in manufacturing as the characteristic information. Furthermore, the server 200 of the present embodiment includes an updating unit 213, which is described later. The same configuration and processing steps as in the above embodiment are denoted by the same symbols, and a detailed description thereof is omitted as appropriate.

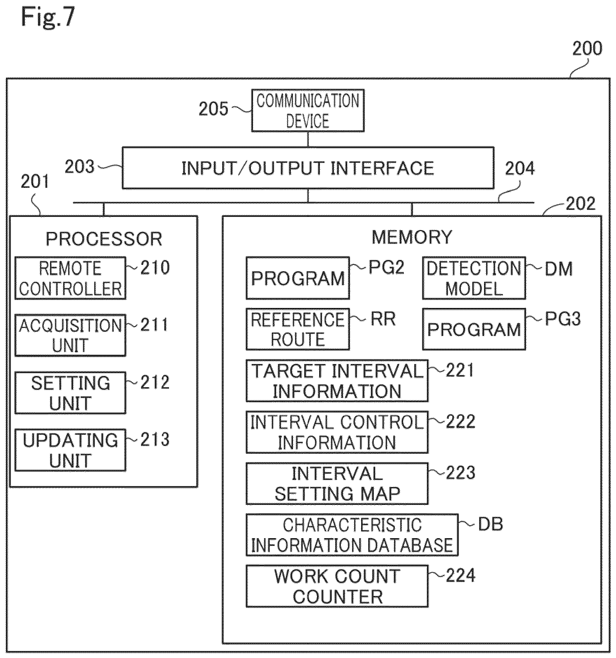

FIG. 7 is a block diagram showing a configuration of the server 200 of the present embodiment. This embodiment differs from the first embodiment in that a processor 201 includes the updating unit 213. The updating unit 213 is a functional part implemented by causing the processor 201 to execute the program PG3.

In addition to the configuration of the first embodiment, the memory 202 includes a characteristic information database DB and a work count counter 224.

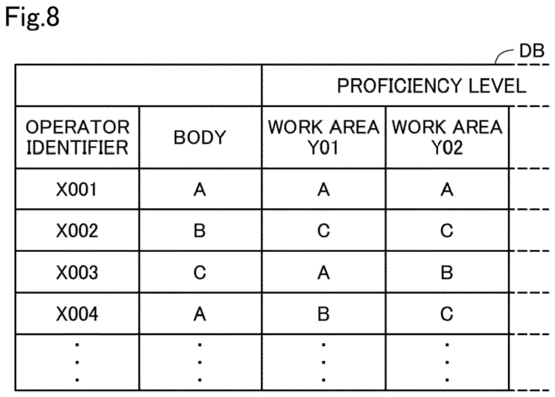

FIG. 8 is a diagram for explaining the characteristic information database DB. As shown in FIG. 7, the characteristic information database DB is a database that is composed of a set of respective items for "operator identifier", "body", and "proficiency level". The "operator identifier" is an identifier uniquely assigned to an operator WO in advance. As in the first embodiment, the "body" is an item indicating the body size of the operator identifier. And, as in the first embodiment, the value of the item "body" is set to one of the ranks "A", "B", and "C". The "proficiency level" is an item indicating information on the operator WO's proficiency level in manufacturing. In the present embodiment, the value of the item "proficiency level" is set to one of the ranks "A", "B", and "C". The ranks of proficiency level "A", "B", and "C" in ascending order indicate lower to higher proficiency levels. The rank A indicates a beginner. The rank C indicates a proficient operator. The proficiency level is associated with the area identifier assigned to the work area PA. That is, the proficiency level is set for each work process performed in the work area PA.

The proficiency level specifically indicates the degree of an operator's skill in a work such as tightening a bolt. Typically, the faster and more accurate the work is and the lower the occurrence rate of defects is, the higher the proficiency level is set to become. Also, the proficiency level is typically set based on an evaluation of the operator WO, for example, by a manager on the production line POL. The proficiency level may reflect the operator WO's years of service.

The operator WO wears an IC tag that stores his/her operator identifier. The IC tag is specifically a communication-capable recording medium capable of exchanging information through wireless communication. The communication device 301 provided in the work area PA is a device that is capable of communicating with the IC tag worn by the operator WO and communicating with the server 200. Before entering the work area PA and performs his/her work, the operator WO brings his/her IC tag close to the communication device 301. When the communication device 301 receives the operator identifier stored in the IC tag close thereto, it transmits, to the server 200, the received operator identifier and the area identifier of the work area PA in which it is located.

When receiving the operator identifier and the area identifier from the communication device 301, the updating unit 213 adds one to the number indicated by the work count counter 224. The work count counter 224 indicates a variable for counting the work counter, i.e., the number of times the operator WO has performed the work in the work area PA. The work count counter is associated with the operator identifier and the area identifier. That is, the work count is counted for each work area PA. In the present embodiment, the operator WO performs an operation of bringing the IC tag close to the communication device 301 once a day. Therefore, in the present embodiment, the work count indicates the number of days that the operator WO has performed the work.

The flowchart of the target interval setting process in the present embodiment is the same as in the first embodiment. FIG. 5 is therefore used to explain the target interval setting process of the present embodiment. In step S11 of FIG. 5, the acquisition unit 211 acquires the rank of the body size of the operator identifier transmitted from the communication device 301 and the rank of the proficiency level of the corresponding area identifier, referring to the characteristic information database DB. The acquisition unit 211 uses the operator identifier acquired from the IC tag worn by the operator WO and the characteristic information database DB to acquire the characteristic information. This enables the acquisition unit 211 to accurately acquire the characteristic information.

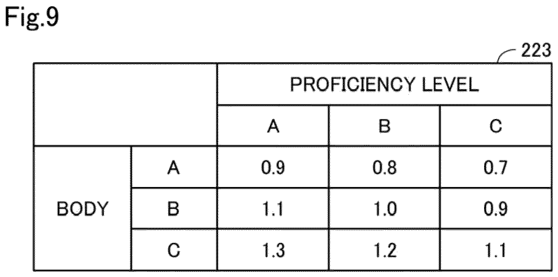

In step S12, the setting unit 212 sets the target interval TI using the acquired characteristic information. In the present embodiment, the characteristic information includes the body size and the proficiency level. FIG. 9 is a diagram for explaining the interval setting map 223 of the present embodiment. The interval setting map 223 in the present embodiment indicates the predetermined correspondence among the rank of body size, the rank of proficiency level, and the target interval TI. As shown in FIG. 9, in the interval setting map 223 of the present embodiment, a value of "ratio" is set according to the rank of "proficiency level", in addition to the rank of "body". The method of setting the target interval TI by using the setting unit 212 is the same as that in the first embodiment. By way of example, when the acquired rank of body is "B", and the rank of proficiency level is "A", the setting unit 212 sets the target interval TI to a value obtained by multiplying the standard interval set for the work area by the ratio "1.1".

As shown in FIG. 9, when the ranks of "body" are the same, the ratio for the rank of "proficiency level" being "A" is set greater than the ratio for the rank of "proficiency level" being "B". Thus, when the ranks of "body" are the same, the target interval TI for a lower proficiency level of the operator WO is set longer than the target interval TI for a higher proficiency level of the operator WO. Therefore, the target interval TI can be set such that the area for the inter-vehicle work becomes wider when the operator WO is a beginner. When the operator WO is a beginner, the work efficiency may be reduced because he/she is not familiar with the work and needs to be careful, for example, not to let the tool come in contact with the vehicle 100. Therefore, when the operator WO is the beginner, setting a wide area for inter-vehicle work enables suppression of a reduction in work efficiency.

Since the processing after setting the target interval TI is the same as in the first embodiment, its description is omitted.

When the updating unit 213 determines that the value of the work count counter 224 has become larger than the predetermined standard count, it updates the rank of the corresponding proficiency level in the characteristic information database DB to a higher rank. The proficiency level of the operator WO is expected to become higher as the work count increases. Thus, by causing the updating unit 213 to update the characteristic information database DB according to the work count, the characteristic information database DB is able to be automatically updated without any updating operation by a person.

According to the second embodiment described above, the setting unit 212 sets the target interval TI using the interval setting map 223, which indicates the predetermined correspondence between the rank of proficiency level and the target interval TI. In the interval setting map 223, when the ranks of "body" are the same, the target interval TI for a lower proficiency level is set to be longer than the target interval TI for a higher proficiency level. Therefore, when the operator WO is a beginner, the area for inter-vehicle work is set wider, thereby enabling suppression of a reduction in work efficiency.

The target interval TI in a case where the operator WO is a skilled operator is set shorter than the target interval TI in a case where the operator WO is a beginner. This allows all the intervals on the production line POL to be adjusted when there is a work area PA where the target interval TI is set longer than the standard interval. Therefore, for one vehicle 100, the entire process time from the start to the end of manufacturing on the production line POL is able to be prevented from becoming excessively long. In addition, the amount of movement of the operator WO is decreased to increase the efficiency by setting the target interval TI shorter when the operator WO is a skilled operator.

The setting unit 212 sets the target interval TI using the interval setting map 223 that indicates the predetermined correspondence between the proficiency level and the target interval TI. In the interval setting map 223, when the ranks of "body" are the same, the target interval TI for a lower proficiency level is set to be longer than the target interval TI for a higher proficiency level. Therefore, the setting unit 212 can efficiently set the target interval TI appropriate to the proficiency level of the operator WO using the interval setting map 223.

The server 200 includes the updating unit 213. The updating unit 213 updates the characteristic information database DB such that the proficiency level associated with the operator WO becomes higher when it is determined that the work count the operator WO has performed the work in the work area PA is greater than the predetermined standard count. This allows the characteristic information database DB to be automatically updated.

### C. Third Embodiment:

In the above second embodiment, the acquiring unit 211 acquires the characteristic information of the operator WO by acquiring the operator identifier stored by the IC tag worn by the operator WO. In the present embodiment, the operator WO wears clothing with an appearance that varies in accordance with the classification corresponding to the proficiency level. Specifically, when the operator WO is a beginner, he/she wears a hat of a predetermined color. Therefore, in the present embodiment, the acquisition unit 211 determines whether the operator WO is a beginner or not through image analysis using the captured image of the operator WO taken by the external sensor 300. The same configuration and processing steps as in the second embodiment above are denoted by the same symbols, and a detailed description thereof is omitted as appropriate. In the present embodiment, only the differences from the second embodiment are described.

The characteristic information database DB of the present embodiment associates the operator identifier with the proficiency level. In the characteristic information database DB of the present embodiment, the proficiency level has two ranks, namely, rank A indicating a beginner, and rank B indicating a non-beginner. The acquisition unit 211 acquires the characteristic information by identifying the classification of the operator WO using a captured image of the clothing of the operator WO. In detail, the acquisition unit 211 determines that the operator WO is a beginner when it is determined that the operator WO is wearing a hat of the predetermined color through image analysis using the captured image including the operator WO. On the other hand, when the acquisition unit 211 determines that the operator WO is not wearing a hat of the predetermined color, it determines that the operator WO is a non-beginner.

According to the third embodiment described above, the acquisition unit 211 acquires the proficiency level, which is the characteristic information, using the clothing worn by the operator WO. Therefore, the acquisition unit 211 can acquire the characteristic information more simply than when identifying the operator WO's work identifier, i.e., an individual.

### D. Fourth Embodiment:

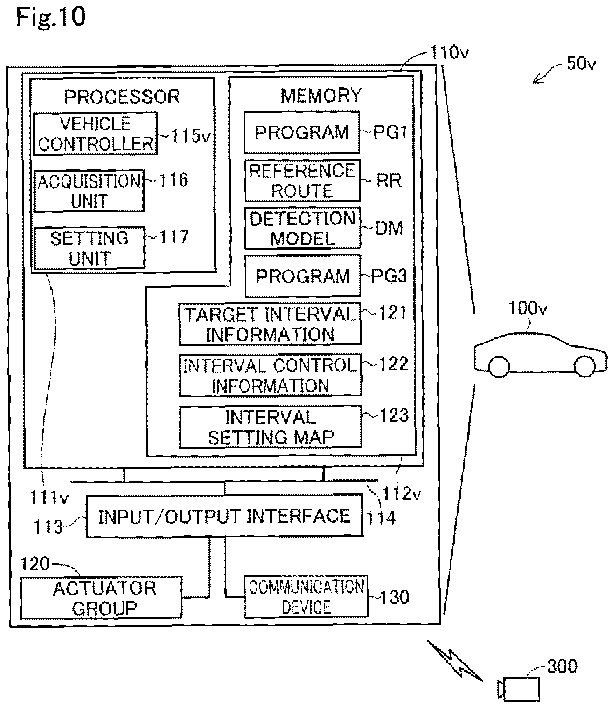

FIG. 10 is an explanatory diagram showing a schematic configuration of a system 50v in a fourth embodiment. In the present embodiment, the system 50v differs from the first embodiment in that it does not include the server 200. A vehicle 100v in the present embodiment is capable of running under autonomous control of the vehicle 100v. The other configurations are the same as those in the first embodiment unless otherwise explained.

In the present embodiment, a processor 111v of a vehicle controller 110v functions as a vehicle controller 115v by executing the program PG1 stored in a memory 112v. The vehicle controller 115v enables the vehicle 100v to run via autonomous control by acquiring output results from the sensors, creating a running control signal using the output results, and operating the actuator group 120 through the output of the created running control signal. In the present embodiment, the memory 112v stores, in addition to the program PG1, a detection model DM and a reference route RR in advance.

In the present embodiment, the processor 111v includes an acquisition unit 116 and a setting unit 117, in addition to the above configuration. The memory 112v stores the program PG3, target interval field information 121, interval control information 122, and an interval setting map 123, in addition to the above configuration. The acquisition unit 116 and the setting unit 117 are functional parts implemented by causing the processor 111v to execute the program PG3. The acquisition unit 116 and the setting unit 117 each function in the same manner as the acquisition unit 211 and the setting unit 212 of the first embodiment, respectively. As a result, the vehicle control device 110v is capable of setting the target interval TI using the captured image transmitted from the external sensor 300.

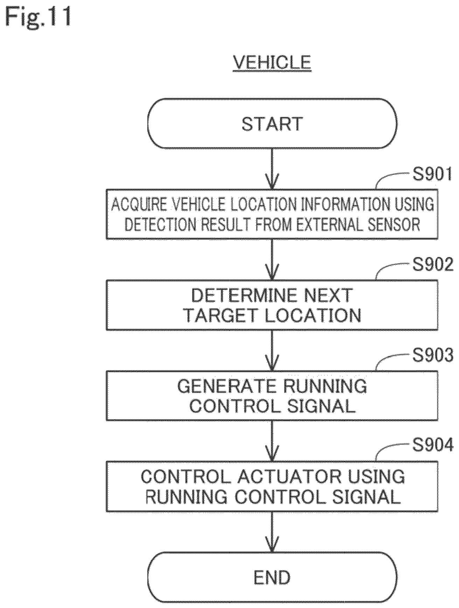

FIG. 11 is a flowchart showing a processing procedure for running control of the vehicle 100v in the fourth embodiment. In the processing procedure of FIG. 11, the processor 111v of the vehicle 100v functions as a vehicle controller 115v by executing the program PG1.

In step S901, the processor 111v of the vehicle controller 110v acquires vehicle location information using detection result output from the camera as the external sensor 300. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator in a predetermined cycle. According to the system 50v in the present embodiment, it is possible to cause the vehicle 100v to run by autonomous control without controlling the vehicle 100v remotely using the server 200.

As in the first embodiment, the vehicle controller 115v creates a running control signal to satisfy the target interval TI at the first location PL1. This suppresses a reduction in work efficiency of the inter-vehicle work.

In another embodiment, the system 50v may include the vehicle 100 and the server 200, and the server 200 may include the acquisition unit 211 and the setting unit 212 that are similar to those of the first embodiment. That is, instead of the vehicle 100v, the server 200 may be configured to include the acquisition unit 211 and the setting unit 212. In this embodiment, the setting unit 212 of the server 200 makes the interval control information 222 to cause the vehicle 100 to run according to the target interval TI. The setting unit 212 then transmits the interval control information 222 to the vehicle 100v. The vehicle 100v creates a running control signal according to the interval control information 222 received.

### E. Other Embodiments (other embodiments regarding setting of target interval):

(E1) In the second embodiment above, the acquisition unit 211 receives and acquires the operator identifier transmitted from the communication device 301. In another embodiment, the acquisition unit 211 may acquire the operator identifier through facial recognition using a captured image of the operator WO. Specifically, the memory 202 stores the operator identifier and a face image of the operator WO in advance. Then, the acquisition unit 211 acquires the operator identifier of the operator WO using the stored face image and the captured image. This allows the acquisition unit 211 to acquire the operator identifier even when the work area PA does not include the communication device 301.
(E2) In the second embodiment above, the acquisition unit 211 acquires the physical characteristics, which is the characteristic information, and the proficiency level. In another embodiment, the acquisition unit 211 may acquire information on the physical condition of the operator WO as the characteristic information. Specifically, the work area PA includes an information terminal capable of communicating with the server 200. Upon entering the work area PA, the operator WO uses the information terminal to input information on his/her physical condition for the day. Specifically, if the operator WO is in good physical condition, he/she enters rank "A" in an entry box for the physical condition, and if he/she is in poor physical condition, he/she enters rank "B" in the entry box. The operator WO inputs rank "B" in the entry box if his/her hand hurts. In the interval setting map 223, the "ratio" for the rank "B" indicating information on the physical condition is set larger than the "ratio" for the rank "A". The acquisition unit 211 sets the target interval TI using the information on the physical condition transmitted from the information terminal. Thus, the target interval TI when the operator WO is in poor physical condition is set longer than the target interval TI when the operator WO is in good physical condition. Therefore, even when the manipulation of a tool by the operator WO is restricted due to, for example, his/her sore hand, the area where the inter-vehicle work is performed is set wider, thereby enabling suppression of a reduction in work efficiency.
(E3) The interval setting map 223 of the second embodiment above includes the item "body". In another embodiment, the interval setting map 223 may include only the item "proficiency level". By having the interval setting map 223 include at least the item "proficiency", at least the degree of proficiency level can be reflected in the target interval TI.
(E4) In the first embodiment above, the acquisition unit 211 sets the rank of body size based on the size of the external shape detected by the captured image. The information used to determine the rank of body size is not limited to the size of the external shape in the captured image. For example, the acquisition unit 211 may set the rank of body size using at least one of the height and the girth of the operator WO in the captured image, or the size of a part of the body, such as the length of the arm, for example.
(E5) In the first embodiment above, the interval setting map 223 is used to set the target interval TI. In another embodiment, a mathematical formula indicating the correspondence between the rank of body and the target interval TI may be used instead of the interval setting map 223.
(E6) In the first embodiment described above, the remote controller 210 performs control such that the interval between the vehicle 100 to be controlled and the front vehicle FV in front of the vehicle 100 is the target interval TI. In other embodiments, the remote controller 210 may perform control such that the interval between the vehicle 100 to be controlled and the rear vehicle BV behind this vehicle 100 is the target interval TI. In the first embodiment above, the remote controller 210 adjusts the running control signal of the vehicle 100 to be controlled. In another embodiment, the remote controller 210 may adjust the running control signal of the front vehicle FV in front of the vehicle 100 to be controlled, instead of the running control signal of the vehicle 100 to be controlled.

### F. Other Embodiments (other embodiments regarding self-running conveyance):

(F1) In each of the above-described embodiments, the external sensor is not limited to the camera but may be the distance measuring device, for example. The distance measuring device is a light detection and ranging (LiDAR) device, for example. In this case, detection result output from the external sensor 300 may be three-dimensional point cloud data representing the vehicle 100. The server 200 and the vehicle 100 may acquire the vehicle location information through template matching using the three-dimensional point cloud data as the detection result and reference point cloud data, for example.
(F2) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
   (1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
   (2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
   (3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. Internal sensors may include, for example, a sensor that detects the state of motion of the vehicle 100, sensors that detect the operating states of various parts of the vehicle 100, and sensors that detect the environment surrounding the vehicle 100. Specifically, the internal sensor may include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.
(F3) In the above-described the fourth embodiment, the vehicle 100v may be equipped with an internal sensor, and detection result output from the internal sensor may be used in at least one of generation of a route and generation of a running control signal. For example, the vehicle 100v may acquire detection result from the internal sensor, and in generating the route, may reflect the detection result from the internal sensor in the route. The vehicle 100v may acquire detection result from the internal sensor, and in generating the running control signal, may reflect the detection result from the internal sensor in the running control signal.
(F4) In the above-described the fourth embodiment, the vehicle 100v acquires vehicle location information using detection result from the external sensor. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 using the generated running control signal. In this case, the vehicle 100v is capable of running without using any detection result from an external sensor. The vehicle 100v may acquire target arrival time or traffic congestion information from outside the vehicle 100v and reflect the target arrival time or traffic congestion information in at least one of the route and the running control signal. The functional configuration of the system 50v may be entirely provided at the vehicle 100v. Specifically, the processes realized by the system 50v in the present disclosure may be realized by the vehicle 100v alone.
(F5) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.
(F6) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle controller 110 and the actuator group 120 in order to fulfill three functions including "run," "turn," and "stop" by unmanned driving. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.
(F7) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.
(F8) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.
(F9) In each of the embodiments described above, some or all of the functions and processes that are implemented by software may also be implemented by hardware. Further, some or all of the functions and processes that are implemented by hardware may also be implemented by software. Examples of the hardware used to implement various functions in each of the embodiments described above include various circuits, such as integrated circuits and discrete circuits.
(F10) In each of the above embodiments, the running control signal is created using the vehicle position information. As shown in (F2) and (F3) above, when the vehicle 100, 100v includes a distance measuring device as the internal sensor that is able to measure the distance to the front vehicle FV, the running control signal may be created such that the distance output by the distance measuring device is the target distance TI.

The present disclosure is not limited to the embodiments described above and is able to be realized with various configurations without departing from the spirit thereof. For example, technical features in the embodiments corresponding to the technical features in the aspects described in the section of SUMMARY are able to be replaced with each other or combined together as necessary in order to solve part or the whole of the problems described previously or to achieve part or the whole of the effects described previously. When the technical features are not described as essential features in the present specification, they are able to be deleted as necessary.

## Claims

1. A control device (200) comprising:
a controller (210) configured to control operations of a plurality of moving objects (100) capable of moving under unmanned driving; and
an acquisition unit (211) configured to acquire characteristic information of an operator performing a work between a target moving object (TG) to be controlled among the plurality of moving objects (100) and a continuous moving object (BV) moving in front or rear of the target moving object (TG), wherein
the controller (210) is configured to control the target moving object (TG) and the continuous moving object (BV) such that an interval between the target moving object (TG) and the continuous moving object (BV) is a target interval, using the acquired characteristic information.

2. The control device (200) according to claim 1, wherein
the characteristic information is information related to a physical characteristic of the operator,
the acquisition unit (211) is configured to acquire a body size indicated by the physical characteristic using a captured image of the operator, and
the control device (200) further comprises a setting unit (212) configured to set the target interval using a predetermined correspondence between the body size and the target interval.

3. The control device (200) according to claim 1, wherein
the characteristic information is information related to a proficiency level in manufacturing, and
the control device (200) further comprises a setting unit (212) configured to set the target interval using a predetermined correspondence between the proficiency level and the target interval.

4. The control device (200) according to claim 3, wherein
the acquisition unit (211) is configured to acquire an operator identifier assigned to the operator in advance, and to acquire the characteristic information corresponding to the acquired operator identifier by referring to a database (DB) that associates the operator identifier with the proficiency level, and
the control device (200) further includes an updating unit (213) configured to count a work count the operator has performed the work and updates the database (DB) such that the proficiency level associated with the operator becomes higher when the work count is greater than a predetermined standard count.

5. The control device (200) according to claim 3, wherein
the operator wears clothing with an appearance that varies in accordance with a classification corresponding to the proficiency level, and
the acquisition unit (211) is configured to acquire the characteristic information by identifying the classification of the operator using a captured image of the clothing of the operator.
